(19) Europäisches Patentamt
European Patent Office
Office européen des brevets

(11) Veröffentlichungsnummer: **0 317 795**
**A1**

(12) **EUROPÄISCHE PATENTANMELDUNG**

(21) Anmeldenummer: **88118094.7**

(22) Anmeldetag: **31.10.88**

(51) Int. Cl.[4]: **C09D 3/70 , C08L 79/08 , B05D 7/16**

(30) Priorität: **23.11.87 DE 3739612**

(43) Veröffentlichungstag der Anmeldung: **31.05.89 Patentblatt 89/22**

(84) Benannte Vertragsstaaten: **ES**

(71) Anmelder: **BASF Lacke + Farben Aktiengesellschaft**
**Max-Winkelmann-Strasse 80**
**D-4400 Münster(DE)**

(72) Erfinder: **Lienert, Klaus-Wilhelm, Dr.**
**Bernadottestrasse 54**
**D-2000 Hamburg 50(DE)**
Erfinder: **Schmitz, Arno, Dr.**
**Lerchenhain 92**
**D-4405 Nottuln(DE)**
Erfinder: **Kunze, Peter Eduard**
**Von Stein-Strasse 5**
**D-4406 Drensteinfurt(DE)**

(74) Vertreter: **Leifert, Elmar, Dr.**
**BASF Lacke + Farben AG Patentabteilung**
**Max-Winkelmann-Strasse 80 Postfach 61 23**
**D-4400 Münster(DE)**

(54) **Verfahren zum Beschichten von Metallbändern im Bandlackierverfahren für die Fertigung von thermisch stark belasteten Teilen.**

(57) Die Erfindung betrifft ein Verfahren zum Beschichten von Metallbändern im Bandlackierverfahren unter Verwendung von Beschichtungsmitteln aus hochhitzebeständigen Systemen (Polyesterimiden, Polyamidocarbonsäuren, Polyamidimiden, Polyhydantoinen und Polybismaleinimiden), Pigmenten und/oder Füllstoffen, geeigneten Hilfsstoffen und Additiven sowie Lösemittel oder Lösemittelgemischen. Es erfolgt eine einoder zweischichtige Verarbeitung, wobei für die Grundierungen als hochhitzebeständige Systeme nur Polyesterimide und Polyhydantoine verwendet werden, während beim Decklack alle aufgeführten hochhitzebeständigen Systeme eingesetzt werden.

Die auf diese Weise beschichteten Metallbänder besitzen eine gute Verformbarkeit, hohe Härte, hervorragenden Korrosionsschutz, hervorragende Chemikalien-, Lösemittel-, Wasser-, Öl-, Schock- und Dauertemperaturbeständigkeit, hervorragende Haftung und Steinschlagfestigkeit und sind besonders geeignet für die Herstellung von Auspuffen, Auspufftöpfen, Abluftrohren, Ofen- und Heizkörperverkleidungen, Grillgeräten und anderen thermisch stark belasteten Teilen.

EP 0 317 795 A1

## Verfahren zum Beschichten von Metallbändern im Bandlackierverfahren für die Fertigung von thermisch stark belasteten Teilen

Die Erfindung betrifft Verfahren zum Beschichten von Metallbändern im Bandlackierverfahren unter Verwendung hochhitzebeständiger Systeme.

Geeignete Bindemittel für das Bandlackierverfahren (Coil-Coating-Verfahren) sind beispielsweise hydroxylgruppenhaltige Polyesterharze, die mit Aminoplastharzen ausgehärtet werden können.

Hochhitzebeständige Systeme, wie z.B. Silikonharze, Polyesterimidharze, Polyimidharze, Polyamidimidharze, Polyhydantoine, Polybismaleinimide, Polyethersulfone und andere sind bekannt. Diese Bindemittel finden je nach chemischer Zusammensetzung Anwendung als Beschichtungsmittel für elektronische Bestandteile, Spulen, elektrische Leiter, thermisch besonders belastete Bauteile, wie Ablüfter, Rohre, Installationen in Fernheizungsanlagen etc. Die Beschichtung mit diesen Beschichtungsmitteln erfolgt durch verschiedene Techniken, wie z.B. Spritzen, Spritzgießen, Tauchen, Streichen usw. Die Nachteile dieser Applikationstechniken bestehen in einer hohen Lösemittelemission und/oder in notwendigen langen Einbrennzeiten.

Aus der EP-A-176 251 sind hochhitzebeständige Anstrichstoffe auf Basis von Silikonharzen bekannt. Diese Anstrichstoffe sind jedoch wenig geeignet zur Auspufflackierung von PKW's.

Bei der Auspufflackierung kommt es nicht nur auf die Hochhitzebeständigkeit an, sondern auch auf Schock- und Wasserbeständigkeiten sowie Beständigkeiten gegenüber Salz und den korrosiven Auspuffgasen. Außerdem ist die Beschichtung von Auspuffen mittels der konventionellen Techniken unter Verwendung von Silikonharzen aufwendig, und die Einbrennzeiten sind lang.

Die der Erfindung zugrundeliegende Aufgabe besteht darin, ein Verfahren zum Beschichten von Metallbändern im Bandlackierverfahren zu entwickeln, das insbesondere geeignet ist zur Beschichtung von stark temperaturbelasteten Teilen, wie Auspuffen, Auspufftöpfen usw. Die erhaltenen Überzüge sollen daher eine gute Temperaturbeständigkeit, eine gute Schock- und Wasserbeständigkeit sowie eine gute Beständigkeit gegenüber Salz, Benzin, Öl und den korrosiven Auspuffgasen aufweisen. Bedingungen sind insbesondere eine gute Dauertemperaturbeständigkeit und ein hervorragender Korrosionsschutz. Außerdem sollen die erhaltenen Überzüge eine gute Substrat- und Zwischenhaftung sowie gute mechanische Verformungseigenschaften aufweisen, und die erforderlichen Einbrennzeiten sollten möglichst kurz sein.

Die der Erfindung zugrundeliegende Aufgabe wird gelöst durch Verfahren der eingangs genannten Art, die dadurch gekennzeichnet sind, daß

I. die Beschichtungsmittel bestehen aus

A) einem hochhitzebeständigen System, entweder bestehend aus

a) 3 bis 50 Gew.-%, vorzugsweise 20 bis 40 Gew.-%. Polyesterimidharz, wobei 20- bis 60gew.-%ige Lösungen der Polyesterimide bei 23 °C Viskositäten im Bereich von 90 bis 4000 mPas aufweisen und die Hydroxylzahlen der Polyesterimide im Bereich von 50 bis 200 mg KOH/g liegen,
oder

b) 3 bis 50 Gew.-%, vorzugsweise 8 bis 30 Gew.-%, Polyhydantoinen, wobei 20- bis 40gew.-%ige Lösungen der Polyhydantoine bei 23 °C Viskositäten im Bereich von 1000 bis 3000 mPas aufweisen,
oder

c) 3 bis 40 Gew.-%, vorzugsweise 5 bis 20 Gew.-%, Polyamidocarbonsäuren, wobei 10- bis 30gew.-%ige Lösungen der Polyamidocarbonsäuren bei 23 °C Viskositäten im Bereich von 2000 bis 7000 mPas aufweisen und wobei die Polyamidocarbonsäuren durch Cyclisierung Imidringe ausbilden,
oder

d) 3 bis 50 Gew.-%, vorzugsweise 15 bis 35 Gew.-%, Polyamidimiden, wobei 20- bis 40gew.-%ige Lösungen der Polyamidimide bei 23 °C Viskositäten im Bereich von 800 bis 3000 mPas aufweisen,
oder

e) 3 bis 50 Gew.-%, vorzugsweise 8 bis 35 Gew.-%, Polybismaleinimiden, wobei 20- bis 40gew.-%ige Lösungen der Polybismaleinimide bei 23 °C Viskositäten im Bereich von 200 bis 4000 mPas aufweisen.

B) 3 bis 40 Gew.-%, vorzugsweise 10 bis 30 Gew.-%, Pigmente und/oder Füllstoffe,

C) bis zu 3 Gew.-% für den Einsatzzweck geeignete Hilfsstoffe und Additive,

D) 10 bis 90 Gew.-%, vorzugsweise 20 bis 70 Gew.-%, eines oder mehrerer organischer Lösemittel,

E) falls Polybismaleinimide eingesetzt werden, bis zu 45 Gew.-% eines olefinisch ungesättigten Monomeren - bezogen auf Polybismaleinimid - und gegebenenfalls einem Radikalstarter, wobei die Summe aller Komponenten A) bis E) jeweils 100 Gew.-% beträgt,

II. bei einer zweischichtigen Verarbeitung der Beschichtungsmittel die Grundierung als hochhitzebeständiges System A) nur Polyesterimide Aa) oder Polyhydantoine Ab) und der Decklack als hochhitzebeständiges System A) eine der Komponenten Aa) bis Ae) enthält, wobei aber Beschichtungsmittel ausgenommen sind, bei denen sowohl die Grundierung als auch der Decklack Polyesterimide als Komponente A) enthält,

III. bei einer einschichtigen Verarbeitung der Beschichtungsmittel als Komponente A) keine Polyesterimide eingesetzt werden und

IV. die Aushärtung der Metallbänder unter Verwendung von geeigneten Katalysatoren bei Objekttemperaturen von 200 bis 350 °C während einer Zeit von 30 bis 120 s erfolgt.

Die als Komponente Aa) verwendeten Polyesterimidharze sind bekannt und sind beispielsweise beschrieben in DE-OS 14 45 263 und DE-OS 14 95 100. Die Herstellung der Polyesterimide erfolgt in bekannter Weise durch Veresterung der mehrwertigen Carbonsäuren mit den mehrwertigen Alkoholen, gegebenenfalls unter Zusatz von Oxycarbonsäuren, und unter Verwendung von imidgruppenhaltigen Ausgangsstoffen. Anstelle der freien Säuren und/oder Alkohole können auch deren reaktionsfähige Derivate eingesetzt werden. Als Carbonsäurekomponente wird vorzugsweise Terephthalsäure eingesetzt, und als mehrwertige Alkohole werden bevorzugt Ethylenglykol, Glycerin und Tris-2-hydroxyethylisocyanurat, wobei letzteres besonders bevorzugt ist, eingesetzt. Die Verwendung von Tris-2-hydroxyethylisocyanurat führt zu einer Erhöhung der Erweichungstemperatur des erhaltenen Lackfilms.

Die imidgruppenhaltigen Ausgangsstoffe können beispielsweise durch Reaktion zwischen Verbindungen erhalten werden, von denen die eine eine fünfgliedrige, cyclische Carbonsäureanhydridgruppierung sowie mindestens noch eine weitere funktionelle Gruppe besitzen muß, während die andere außer einer primären Aminogruppe noch mindestens eine weitere funktionelle Gruppe enthält. Diese weiteren funktionellen Gruppen sind vor allem Carboxylgruppen oder Hydroxylgruppen, es können jedoch auch weitere primäre Aminogruppen oder Carbonsäureanhydridgruppen sein.

Beispiele für Verbindungen mit einer cyclischen Carbonsäureanhydridgruppierung mit einer weiteren funktionellen Gruppe sind vor allem Pyromellithsäureanhydrid und Trimellithsäureanhydrid. Es kommen jedoch auch andere aromatische Carbonsäureanhydride in Frage, beispielsweise die Naphthalintetracarbonsäuredianhydride oder Dianhydride von Tetracarbonsäuren mit zwei Benzolkernen im Molekül, bei denen die Carboxylgruppen in 3,3′,4- und 4′-Stellung stehen.

Beispiele für Verbindungen mit einer primären Aminogruppe sowie einer weiteren funktionellen Gruppe sind insbesondere diprimäre Diamine, z.B. Ethylendiamin, Tetramethylendiamin, Hexamethylendiamin, Nonamethylendiamin und andere aliphatische diprimäre Diamine. Ferner kommen in Betracht aromatische diprimäre Diamine, wie Benzidin, Diaminodiphenylmethan, Diaminodiphenylketon, -sulfon, -sulfoxyd, -ether und -thioether, Phenylendiamine, Toluylendiamine, Xylylendiamine sowie auch Diamine mit drei Benzolkernen im Molekül, wie Bis(4-aminophenyl)-α,α′-p-xylol oder Bis(4-aminophenoxy)1,4-benzol, und schließlich cycloaliphatische Diamine, wie das 4,4′-Dicyclohexylmethandiamin. Als aminogruppenhaltige Verbindungen mit einer weiteren funktionellen Gruppe sind ferner auch Aminoalkohole verwendbar, z.B. Monoethanolamin oder Monopropanolamine, weiterhin Aminocarbonsäuren. wie Glycin, Aminopropionsäuren, Aminocapronsäuren oder Aminobenzoesäuren.

Zur Herstellung der Polyesterimidharze werden bekannte Umesterungskatalysatoren verwendet, beispielsweise Schwermetallsalze, wie Bleiacetat, Zinkacetat, weiterhin organische Titanate, Cerverbindungen sowie organische Säuren, wie z.B. para-Toluolsulfonsäure. Als Vernetzungskatalysatoren bei der Aushärtung der Polyesterimide können die gleichen Umesterungskatalysatoren - zweckmäßigerweise in einem Anteil bis zu 3 Gew.-%, bezogen auf das Bindemittel, -verwendet werden.

Polyhydantoine (Komponente Ab)) sind bekannt und beispielsweise in DE-OS 31 44 701, DE-OS 33 47 659, DE-OS 28 54 442, DE-PS 17 20 624, DE-OS 30 03 773 und Angew. Chemie 83, Seiten 339-347 (1971), beschrieben.

Zum Aufbau der Polyhydantoine bestehen verschiedene Möglichkeiten. Die größte Bedeutung besitzen die Herstellung aus N,N′-Bis-(alkoxycarbonylmethyl)-diaminen oder N-Alkoxycarbonylmethyl-substituierten Verbindungen, die wenigstens noch eine mit Isocyanaten reagierende Gruppe besitzen, und Polyisocyanaten sowie die Herstellung aus Polycarbodiimiden mit Derivaten α,β-ungesättigter Carbonsäuren.

Die Polyhydantoine können daher beispielsweise dadurch hergestellt werden, daß Polyisocyanate mit polyfunktionellen, bevorzugt difunktionellen $\alpha$-Aminocarbonsäurederivaten der allgemeinen Formel (I) umgesetzt werden:

$$R^2 \left[ NH - \underset{R^4}{\overset{R^3}{\underset{|}{\overset{|}{C}}}} - CO - R^5 \right]_n \qquad (I)$$

worin $R^2$ für einen gegebenenfalls mit Halogen, Alkylgruppen mit $C_1$ bis $C_{10}$ und/oder Arylgruppen mit $C_6$ bis $C_{12}$ substituierten Alkylrest mit 2 bis 20 C-Atomen, einen Arylrest mit 5 bis 12 C-Atomen, einen Cycloalkylrest mit 5 bis 12 C-Atomen, einen Alkyl/Arylrest mit 6 bis 20 C-Atomen und einen Heteroatome wie N, O oder S im Ring enthaltenden Aryl- oder Cycloalkylrest mit 5 bis 12 C-Atomen steht, $R^3$ und $R^4$ Wasserstoff, einen Alkylrest mit $C_1$ bis $C_{20}$, einen Arylrest mit $C_5$ bis $C_{12}$ oder einen Aralkylrest mit $C_6$ bis $C_{20}$, $R^5$ eine Hydroxylgruppe, eine Aminogruppe, eine $C_1$ bis $C_{20}$ Alkylamino-, $C_1$ bis $C_{20}$ Dialkylamino-, $C_1$ bis $C_{20}$ Alkoxy- oder $C_5$ bis $C_{12}$ Aroxygruppe und n eine ganze Zahl von 2 bis 4, vorzugsweise 2, bedeuten. Sie sind aus der US-Patentschrift 3 397 253 bekannt.

Aromatische Reste für $R^2$ sind bevorzugt insbesondere die von Benzol, Azobenzol, Naphthalin, Anthracen, Diphenyl, Triphenylmethan, Diphenylmethan und Diphenylether. Diese Reste können auch ein- oder mehrfach substituiert sein, beispielsweise durch $C_1$ bis $C_{20}$ Alkyl-(Methyl-), Halogen-(Chlor-), Nitro-, $C_1$ bis $C_{20}$ Alkoxy-(Methoxy-), $C_1$ bis $C_{20}$ Dialkylamino-(Dimethylamino-), Acyl-(Acetyl-), $C_2$ bis $C_{17}$ Carbalkoxy-(Carbometh- oder -ethoxy-) und Cyanogruppen. Bevorzugt sind die gegebenenfalls ein- oder zweifach durch Methyl und/oder Chlor oder ein- oder zweifach mit Carboxylgruppen substituierten Reste, insbesondere von Benzol, Naphthalain, Diphenylmethan oder Diphenylether.

Die Reste $R^3$ und $R^4$ können auch als Glieder eines cyclischen $C_2$- bis $C_{20}$-Alkylrestes miteinander verknüpft sowie durch Halogen (Chlor, Brom), Cyan, Hydroxycarbonyl, Aminocarbonyl, Alkoxycarbonyl oder Aroxycarbonyl substituiert sein.

Die Herstellung der $\alpha$-Aminocarbonsäurederivate ist bekannt und kann z.B. durch Umsetzung von aromatischen Aminen oder Aminocarbonsäuren mit Halogenessigsäure oder ihren Derivaten in Gegenwart von Basen wie z.B. $CaCa_3$ oder auch durch Kondensation mit Blausäure und Aldehyden oder Ketonen unter nachfolgender Umwandlung der Nitrilgruppe in z.B. Carbonsäure, Ester oder Amid erfolgen.

Weiterhin können auch Polyamine mit 1,2-Alkylendicarbonsäureestern zu Asparaginsäureestern umgesetzt werden, die dann ebenfalls mit Polyisocyanaten unter Cyclisierung zu Polyhydantoinen reagieren (vgl. z.B. DE-PS 17 20 624).

Als Isocyanatkomponente kommen aliphatische, cycloaliphatische, araliphatische, aromatische und heterocyclische Polyisocyanate in Betracht. Geeignete Beispiele findet man z.B. in DE-OS 28 54 442 sowie bei der Beschreibung der als Komponente Ad) eingesetzten Polyamidimide dieser Anmeldung.

Bei der Umsetzung zwischen dem Isocyanat und der N-Alkoxycarbonylmethyl-Komponente ist es wesentlich, daß die Addition möglichst quantitativ abgelaufen ist, bevor die Cyclisierung der Harnstoffzwischenstufe einsetzt, weil sonst der bei der Cyclisierung freiwerdende Alkohol seinerseits Isocyanat verbraucht. Entscheidenden Einfluß auf den Reaktionsablauf haben Katalysator und Reaktionsmedium. Eine Möglichkeit besteht darin, die Reaktion in Phenol oder Kresol durchzuführen, da diese Lösemittel als Katalysator für die Additionsreaktion des Isocyanats an die N-Alkoxycarbonylmethyl-Komponente wirken und weil außerdem die Polymeren in diesen Medien gut löslich sind.

Wie in der DE-OS 28 54 442 beschrieben, ist es aber auch möglich, die Reaktion in phenolfreien Lösungsmitteln durchzuführen, wenn die Reaktion der$\alpha$-Aminocarbonsäurederivate mit dem Isocyanat in Gegenwart saurer Gruppen, vorzugsweise Carboxylgruppen, bei Temperaturen von -10 bis 500 °C, vorzugsweise bei 20 bis 400 °C, durchgeführt wird. Besonders hochwertige Hydantoinverbindungen werden erhalten, wenn die carboxylgruppenhaltige Verbindung mindestens bifunktionell ist, d.h. neben der Carboxylgruppe noch eine weitere funktionelle Gruppe wie z.B. eine Carboxyl-, Carbonsäureester-, cyclisches Anhydrid-, Hydroxy-, Amino- oder Glycinderivatgruppe enthält. Vorzugsweise werden Polycarbonsäuren, besonders bevorzugt Dicarbonsäuren, eingesetzt. Beispiele für geeignete saure Verbindungen sowie nähere Einzelheiten zu dem Verfahren findet man in der DE-OS 28 54 442.

Die Polyhydantoine können weiterhin durch Umsetzen eines Carbodiimids mit dem Derivat einer $\alpha,\beta$-ungesättigten Carbon säure der Formel (II)

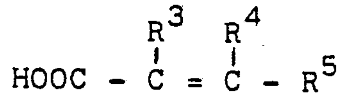

(II)

worin
$R^3$ und $R^4$ Wasserstoff oder niederes Alkyl,
$R^5$ eine CN-, CHO-Gruppe oder eine $-COR^6$-Gruppe bedeuten mit $R^6$ = Alkyl, Aryl, Alkoxy, Arylalkoxy oder Dialkylamino
erhalten werden.

Als Carbodiimid-Verbindungen können Monocarbodiimide mit einer -N=C=N-Gruppe im Molekül, deren cyclische Dimere oder Trimere oder auch lineare bzw. verzweigte Polycarbodiimide mit mehr als 2 Carbodiimid-Gruppen im Molekül verwendet werden.

Als Monocarbodiimide werden N,N′-symmetrisch und/oder asymmetrisch substituierte aliphatische, aliphatisch-aromatische, cyclische, heterocyclische, aromatische, gegebenenfalls durch Heteroatome substituierte Verbindungen mit einer -N=C=N-Gruppe im Molekül eingesetzt, z.B. Dialkylcarbodiimide wie Dimethyl-, Diethyl-, Diisopropyl-, Dihexyl-, Dibutyl-, Dinonyl-, Didodecyl- und Distearylcarbodiimid, vorzugsweise aromatische, gegebenenfalls substituierte Monocarbodiimide wie Diphenyl-, Ditolyl-, Dinaphthylcarbodiimid, Di-(p-iodphenyl)-, Di-(p-dimethylaminophenyl)-, Di-(pyridyl)-, Di-Nitro-, -Alkoxy-, -Aroxy-. -Chlor-, -Dichlor-, -Trichlor-, -Tetrachlor-, -Pentachlor-, -Benzyl-, -p-Bromphenylcarbodiimid oder Carbodiimid-dibenzoesäureester, -diphthalsäureester, -diisophthalsäureester, Carbodiimid-dibenzonitril, cycloaliphatische Carbodiimide wie Dicyclohexylcarbodiimid und ungesättigte Carbodiimide wie Diallyl-, Dioleyl-, Dicyclohexenylcarbodiimid.

Weiterhin können die N-Sulfonylcarbodiimide $RSO_2N=C=NR$, die N-Aminocarbodiimide $RN=C=NR_2$ oder die N,N′-Disilylcarbodiimide, wie diese z.B. in Chem. Rev. 67,2 (1967), S. 107, aufgeführt sind, eingesetzt werden.

Als Ausgangskomponenten kommen ebenso aliphatische, cycloaliphatische, araliphatische, aromatische und heterocyclische lineare oder verzweigte Polycarbodiimide mit mehr als zwei Carbodiimidgruppen in Betracht sowie deren Gemische oder Polycarbodiimide, die eine statistische Zusammensetzung oder einen blockartigen Aufbau aus unterschiedlichen Strukturelementen in bestimmter Sequenzlänge im Polymermolekül aufweisen und somit die oben angeführten aliphatischen, cycloaliphatischen, araliphatischen, aromatischen und hterocyclischen Struktureinheiten in unterschiedlichsten Verhältnissen sowohl statistisch verteilt als auch blockweise angeordnet im Polymermolekül enthalten können.

Besonders bevorzugt sind Gemische aus Poly-Toluylencarbodiimiden (2,4- und 2,6-Substitutionsprodukte), Poly-m-phenylencarbodiimiden sowie Polycarbodiimide auf der Basis von Anilin-Formaldehydkondensaten mit Polyphenylen-methylen-Struktur und die Poly-4,4′-diphenylether-, Poly-p-phenylen-, Poly-1,5-naphthylencarbodiimide, Polyisophoron-carbodiimide und Polyhexamethylencarbodiimide und/oder deren Gemische sowie Blockpolycarbodiimide z.B. der folgenden Strukturen:

-B-B-B-A-A-A-A-B-B-B

-C-C-B-B-B-A-A-A-A-B-B-B-C-C

wobei A z.B. ein aromatisches Strukturelement wie Diphenylmethan ist, B einen aliphatischen Rest R wie z.B. den Isophoronrest und C eine aromatische Einheit wie z.B. die Toluylen- oder Naphthylengruppe darstellt. Die Darstellung der Carbodiimide ist z.B. in DE-OS 33 47 659 und DE-OS 31 44 701 beschrieben.

Beispiele für geeignete α,β-ungesättigte Carbonsäurederivate der oben angegebenen Formel (II) sind:

Fumarsäure- und Maleinsäuremononitril, die Halbamide der Fumar- und Maleinsäure, besonders bevorzugt die N-Dimethyl-, N-Diethyl-, N-Methylethylmaleinamidsäure bzw. -fumaramidsäure, die Monoester der Malein- und Fumarsäure, wie z.B. Fumar- bzw. Maleinsäuremonomethylester, -ethylester usw., die z.B. durch Umsetzung der Malein-, Fumarsäure oder des Maleinsäureanhydrids mit den entsprechenden Alkoholen oder Hydroxyethern wie Butanol, Isopropanol, Hexanol, Cyclohexanol, Benzylalkohol, Ethylenglykol oder Ethylenglykolmonomethylether usw. zu den Monoestern umgesetzt werden, β-Benzoylacrylsäure und deren Derivate, die z.B. durch Friedel-Crafts-Acylierung gewonnen werden können, β-Formylacrylsäure. Weitere Beispiele findet man z.B. in DE-OS 33 47 659.

Auch können anstelle der Derivate der α,β -ungesättigten Carbonsäuren Gemische oder partiell umgesetzte Gemische aus α,β-ungesättigten cyclischen Dicarbonsäureanhydriden und aus Hydroxyverbindungen, vorzugsweise aromatischen Hydroxyverbindungen, eingesetzt werden (vgl. z.B. DE-OS 33 47 659).

Im allgemeinen werden pro Äquivalent Carbodiimid mindestens 1 val des $\alpha,\beta$-ungesättigten Carbonsäurederivats verwendet. Es sind aber auch sehr weitgehende Abweichungen von diesen Mengenverhältnissen möglich.

Die Umsetzung der Carbodiimide mit den Derivaten der $\alpha,\beta$-ungesättigten Carbonsäuren kann in homogener Phase, als heterogene Reaktion in Suspension, in Substanz oder in einem Überschuß einer der Reaktionskomponenten in Zeiten zwischen einigen Minuten bis zu mehreren Stunden bei Temperaturen von 20 bis ca. 250 °C, bevorzugt 30 bis 200 °C, ausgeführt werden. Als Reaktionsmedien eignen sich Lösemittel, die unter den Reaktionsbedingungen nicht reagieren oder gegebenenfalls lockere, weiterreagierende Additionsverbindungen bilden. Dies sind z.B. aliphatische, aromatische oder heterocyclische, gegebenenfalls substituierte Kohlenwasserstoffe wie z.B. Methylenchlorid, $\gamma$-Butyrolacton, Toluol, Xylol, Phenol, Kresol u.a. Oft werden auch Gemische aus einer niedrig- und einer höhersiedenden Flüssigkeit wie z.B. Methylenchlorid/Chlorbenzol eingesetzt. Bevorzugt werden phenolische Lösemittel/-gemische eingesetzt, da sie auch die entstehenden Polyhydantoine lösen.

Gegebenenfalls kann die Reaktion in Gegenwart von Katalysatoren, z.B. von Katalysatoren, die die Addition von OH-funktionellen Verbindungen an die Carbodiimidgruppe beschleunigen, oder von Basen durchgeführt werden. Insbesondere geeignet sind die Katalysatoren, die zur Bildung der Carbodiimide benutzt werden, z.B. Phospholinoxid. Meist ist aber kein Katalysator erforderlich. Die Umsetzung wird zweckmäßigerweise unter einem inerten Schutzgas wie Stickstoff oder Argon durchgeführt.

Wie in der DE-OS 30 03 773 beschrieben, können Polyhydantoine auch hergestellt werden durch Umsetzung bei einer Temperatur von 0 bis 450 °C, vorzugsweise von 30 bis 250 °C, von organischen Diisocyanaten mit gegebenenfalls substituierten Fumarsäuremonoestern der allgemeinen Formel (III)

$$R^1 - OOC - \overset{R^2}{\overset{|}{C}} = \overset{R^3}{\overset{|}{C}} - COOH \qquad (III)$$

in der $R^1$, $R^2$, $R^3$ gleich oder verschieden einen aliphatischen Rest mit $C_1$ bis $C_{22}$, vorzugsweise $C_1$ bis $C_{17}$, aliphatisch aromatischen Rest mit $C_7$ bis $C_{20}$, vorzugsweise $C_7$ bis $C_{15}$, oder aromatischen Rest mit $C_5$ bis $C_{16}$, vorzugsweise $C_6$ bis $C_{13}$ oder heterocyclischen Rest mit $C_3$ bis $C_{10}$ C-Ringatomen und 1 bis 3 Heteroatomen wie N, S und/oder O im Ring und $R^2$ und $R^3$ außerdem noch H und Halogen, vorzugsweise F und Cl, bedeuten.

Lösungen der Polyhydantoine weisen bei Festkörpern von 20 bis 40 Gew.-% bei 23 °C Viskositäten von 1000 bis 3000 mPas auf.

Die als Komponente Ac) verwendeten Polyamidocarbonsäuren sind bekannt und sind beispielsweise in GB 898.651, US 3.207.728 und US 3.234.181 beschrieben. Die Herstellung der Polyamidocarbonsäuren erfolgt in bekannter Weise (vgl. z.B. GB-PS 898.651) durch Umsetzung von primären Di-, Tri- oder Tetraminen mit Anhydriden von Tetracarbonsäuren in geeigneten Lösungsmitteln.

Beispiele für geeignete primäre Diamine sind aliphatische diprimäre Diamine wie z.B. Ethylendiamin, Tetramethylendiamin, 1,2-Bis-(3-aminopropoxy)-ethan, 2,2-Dimethylpropylendiamin, Hexamethylendiamin, Heptamethylendiamin, Octamethylendiamin, Nonamethylendiamin, Decamethylendiamin, Dodecamethylendiamin, 3-Methylheptamethylendiamin, 4,4-Dimethylheptamethylendiamin, 2,11-Diaminododecan, 3-Methoxyhexamethylendiamin, 2,2-Dimethylpropylendiamin, 2,5-Dimethylhexamethylendiamin, 2,5-Dimethylheptamethylendiamin, 5-Methylnonamethylendiamin, 2,17-Diaminoeicosadecan, 1,10-Diamino-1,10-dimethyldecan, 1,12-Diaminooctadecan; cycloaliphatische diprimäre Diamine wie z.B. 4,4′-Diaminodicyclohexylmethan, 1,4-Diaminocyclohexan; diprimäre aromatische Diamine wie z.B. Benzidin, 4,4′-Diaminodiphenylmethan, 4,4′- bzw. 3,3′-Diaminodiphenylpropan, 4,4′- bzw. 3,3′-Diaminodiphenylketon, -oxid, -sulfon, -sulfid, -sulfoxid, -ether und -thioether, Phenylendiamine, Toluylendiamine, Xylylendiamine, 1,5-Diaminonaphthalin, 3,3′-Dimethoxybenzidin, 3,3′-Dimethyl-4,4′-diphenyldiamin, 2,4-Bis-(beta-amino-t-butyl)-toluol, Bis-(para-beta-amino-t-butylphenyl)-ether. Bis-(para-beta-methyl-delta-amino-pentyl)-benzol, 1-Isopropyl-2,4-metaphenylendiamin. Bis-para-(1,1-dimethyl-5-amino-pentyl)-benzol, 2,6-Diaminopyridin und Bis-(4-aminophenyl)-methylphosphinoxid sowie auch Diamine mit drei Benzolkernen im Molekül wie Bis-(4-aminophenyl)-$\alpha,\alpha'$-p-Xylol, Bis-(4-aminophenoxy)-1,4-benzol oder Bis-(4-aminophenyl)-phenylphosphinoxid.

Die primären Tri- und Tetramine sind vorzugsweise Verbindungen, bei denen die $NH_2$-Gruppen von einem Benzol-, Naphthalin-, Pyridin- oder einem Triazinring getragen werden. Sie können auch von mehreren Benzolringen getragen werden, die untereinander durch verschiedene Alkyl-, Aryl-, Ether-, Sulfon-, Sulfid-, Phosphatgruppen u.a. verbunden sind. Als Beispiele für solche Amine kann man die folgenden nennen: 1,2,4-Triaminobenzol, 1,2,3-Triaminobenzol, 1,3,5-Triaminobenzol, 2,4,6-Triaminotoluol, 2,4,6-Triamino-1,3,5-trimethylbenzol, 1,3,7-Triaminonaphthalin, 2,4,4'-Triaminodiphenyl, 2,4,6-Triaminopyridin, 2,4,4'-Triaminophenylether, 2,4,4'-Triaminodiphenylmethan, 2,4,4'-Triaminodiphenylsulfon, 2,4,4'-Triaminobenzophenon, 2,4,4'-Triamino-3-methyldiphenylmethan, N,N,N-Tri-(4-aminophenyl)-amin, Tri-(4-aminophenyl)-methan, Phenyl-4,4'-4''-triaminoorthophosphat, Tri-(4-aminophenyl)phosphinoxyd, 3,5,4'-Triaminobenzanilid, Melamin, 3,5,3',5'tetraaminobenzophenon, 1,2,4,5-Tetraaminobenzol, 2,3,6,7-Tetraaminonaphthalin, 3,3'-Diaminobenzidin, 3,3',4,4'-Tetraaminophenylether, 3,3',4,4'-Tetraaminodiphenylmethan, 3,3',4,4'-Tetraaminodiphenylsulfon, 3,5-Bis-(3,4'-diaminophenyl)-pyridin.

Für die Darstellung der Polyamidocarbonsäuren geeignete Carbonsäureanhydride sind z.B. Pyromellithsäuredianhydrid, Naphthalintetracarbonsäuredianhydride, Dianhydride von Tetracarbonsäuren mit 2 Benzolkernen im Molekül, bei denen die Carboxylgruppen in 3,3',4,4'-Stellung stehen, wie z.B. 3,3',4,4'-Diphenyltetracarbonsäuredianhydrid, Bis-(3,4-dicarboxyphenyl)-etherdianhydrid, 2,2-Bis-(3,4-dicarboxyphenyl)-propandianhydrid sowie Thiophentetracarbonsäureanhydrid.

Geeignete Lösemittel für die Darstellung der Polyamidocarbonsäuren sind solche organischen Verbindungen, deren funktionelle Gruppen nicht in größerem Umfang mit den Amin- und Anhydridgruppen der Ausgangsstoffe reagieren und die mindestens entweder das Amin oder das Anhydrid, bevorzugt sowohl beide Ausgangsverbindungen als auch die entstehende Amidocarbonsäure, lösen. Beispiele sind N,N-Dimethylformamid, N,N-Dimethylacetamid, N,N-Diethylformamid, N,N-Diethylacetamid, N,N-Dimethylmethoxyacetamid, N-Methylcaprolactam, Dimethylsulfoxid, N-Methylpyrrolidon, Tetramethylharnstoff, Pyridin, Formamid, N-Methylformamid, N-Acetylpyrrolidon, Dimethylsulfon, Tetramethylensulfon und Hexamethylphosphoramid. 10- bis 30%ige Lösungen der hergestellten Polyamidocarbonsäuren weisen bei 23°C Viskositäten von 2000 bis 7000 mPas auf.

Die Polyamidocarbonsäuren sind thermisch mit oder ohne Zusatz entwässernder Mittel durch Cyclisierung in die Polyimide überführbar.

Die als Komponente Ad) verwendeten Polyamidimide sind ebenfalls bekannt und beispielsweise in US 3 554 984, DE-OS 24 41 020, DE-OS 25 56 523, DE-AS 12 66 427 und DE-OS 19 56 512 beschrieben. Die Herstellung der Polyamidimide erfolgt in bekannter Weise aus Polycarbonsäuren oder deren Anhydriden, bei denen 2 Carboxylgruppen in vicinaler Stellung stehen und die mindestens noch eine weitere funktionelle Gruppe besitzen müssen und aus Polyaminen mit wenigstens einer primären, zur Imidringbildung fähigen Aminogruppe oder aus Verbindungen mit wenigstens 2 Isocyanatgruppen. Die Polyamidimide können auch durch Umsetzung von Polyamiden, Polyisocyanaten, die mindestens 2 NCO-Gruppen enthalten, und cyclischen Dicarbonsäureanhydriden, die mindestens eine weitere kondensations- oder additionsfähige Gruppe enthalten, gewonnen werden.

Weiterhin ist es auch möglich, die Polyamidimide aus Diisocyanaten oder Diaminen und Dicarbonsäuren herzustellen, wenn eine der Komponenten bereits die Imidgruppe enthält. So kann insbesondere zuerst ein Tricarbonsäureanhydrid mit einem diprimären Diamin zu der entsprechenden Diimidocarbonsäure umgesetzt werden, die dann mit einem Diisocyanat zu dem Polyamidimid reagiert.

Für die Herstellung der Polyamidimide werden bevorzugt Tricarbonsäuren bzw. ihre Anhydride eingesetzt, bei denen 2 Carboxylgruppen in vicinaler Stellung stehen. Bevorzugt sind die entsprechenden aromatischen Tricarbonsäureanhydride, wie z.B. Trimellithsäureanhydrid, Naphthalintricarbonsäureanhydride, Bisphenyltricarbonsäureanhydride sowie weitere Tricarbonsäuren mit 2 Benzolkernen im Molekül und 2 vicinalen Carboxylgruppen, wie die in DE-OS 19 56 512 aufgeführten Beispiele. Ganz besonders bevorzugt wird Trimellithsäureanhydrid eingesetzt. Als Aminkomponente können die bei den Polyamidocarbonsäuren bereits beschriebenen diprimären Diamine eingesetzt werden. Weiterhin können auch aromatische Diamine eingesetzt werden, die einen Thiadiazolring enthalten, wie z.B. 2,5-Bis-(4-aminophenyl)-1,3,4-thiadiazol, 2,5-Bis-(3-aminophenyl)-1,3,4-thiadiazol, 2-(4-aminophenyl)-5-(3-aminophenyl)-1,3,4-thiadiazol sowie Gemische der verschiedenen Isomeren.

Geeignete Diisocyanate für die Herstellung der Polyamidimide sind aliphatische Diisocyanate wie z.B. Tetramethylen-, Hexamethylen-, Heptamethylen- und Trimethylhexamethylendiisocyanate; cycloaliphatische Diisocyanate wie z.B. Isophorondiisocyanat, $\omega,\omega'$-Diisocyanat-1,4-dimethylcyclohexan, Cyclohexan-1,3-, Cyclohexan-1,4-, 1-Methylcyclohexan-2,4- und Dicyclhexylmethan-4,4'-diisocyanat; aromatische Diisocyanate wie z.B. Phenylen-, Toluylen-, Naphthalin- und Xylylendiisocyanate sowie substituierte aromatische Systeme wie z.B. Diphenylether-, Diphenylsulfid-, Diphenylsulfon- und Diphenylmethan-diisocyanate; gemischt aromatisch-aliphatische und aromatisch-hydroaromatische Diisocyanate wie z.B. 4-Phenylisocyanatmethylisocyanat, Tetrahydronaphthylen-1,5-, Hexahydrobenzidin-4,4'- und Hexahydrodiphenylmethan-4,4'-diisocyanat. Vorzugsweise werden 4,4'-Diphenylmethandiisocyanat, 2,4- und 2,6-Toluylendiisocyanat sowie Hexamethylendiisocyanat eingesetzt.

Als Polyamide eignen sich diejenigen Polyamide, die durch Polykondensation von Dicarbonsäuren oder deren Derivaten mit Diaminen oder von Aminocarbonsäuren und ihren Derivaten, wie z.B. Lactamen,

erhalten worden sind.

Beispielhaft seien folgende Polyamide genannt: Dimethylenbernsteinsäureamid, Pentamethylenpimelinsäureamid, Undecanmethylentridecandicarbonsäureamid, Hexamethylenadipinsäureamid, Hexamethylensebacinsäureamid, Polycapronsäureamid. Besonders bevorzugt sind Hexamethylenadipinsäureamid und Polycapronsäureamid.

Geeignete Lösemittel sind - wie im Falle der Polyamidocarbonsäuren - solche organischen Verbindungen, deren funktionellen Gruppen nicht in größerem Ausmaß mit den Ausgangsstoffen reagieren und die mindestens 1 Komponente, bevorzugt sowohl Ausgangsstoffe als auch das Polyamidimid lösen. Beispiele hierfür sind bei der Beschreibung der Polyamidocarbonsäuren aufgeführt. Als Vernetzungskatalysatoren bei der Aushärtung der Polyamidimide können lösliche Schwermetallsalze wie z.B. Zinkoktoat, Cadmiumoktoat, Tetraisopropyltitanat oder Tetrabutyltitanat in einer Menge von bis zu 3 Gew.-%, bezogen auf das Bindemittel, eingesetzt werden.

Die Viskositäten von 20- bis 40gew.-%igen Lösungen der Polyamidimide liegen bei 23 °C im Bereich von 800 bis 3000 mPas.

Polybismaleinimide (Komponente Ae)) sind bekannt und beispielsweise in DE-OS 21 31 735 und DE-PS 17 70 867 beschrieben. Sie werden durch Umsetzung von Bismaleinimiden und Verbindungen, die mindestens 2 primäre Aminogruppen aufweisen, im Verhältnis Bisimid:$NH_2$ = 0,6 bis 2,5:1 nach bekannten Methoden erhalten.

Die Bismaleinimide sind herstellbar durch Umsetzung eines diprimären Diamins mit Maleinsäureanhydrid. Bevorzugt werden folgende Bismaleinimide eingesetzt: N,N′-Ethylen-bis-maleinimid, N,N′-Hexamethylen-bis-maleinimid, N,N′-m-Phenylen-bismaleinimid, N,N′-p-Phenylen-bis-maleinimid, Bis-(4-malein imidophenyl)-methan, N,N′-4,4′-Diphenylether-bis-maleinimid, N,N′-4,4′-Diphenylsulfon-bis-maleinimid, N,N′-4,4′-Dicyclohexylmethan-bis-maleinimid. N,N′-α,α′-4,4′-Dimethylencyclohexan-bis-maleinimid, N,N′-m-Xylylen-bis-maleinimid, N,N′-p-Xylylen-bis-maleinimid, N,N′-4,4′-Diphenylcyclohexan-bis-maleinimid, N,N′-4,4′-(1,1-Diphenylpropan)-bis-maleinimid, N,N′-4,4′-Triphenylmethan-bis-maleinimid, N,N′-4,4′-(1,1,1-Triphenylethan-)bis-maleinimid, N,N′-3,5-1,2,4-Triazol-bis-maleinimid.

Für die Herstellung der Polybismaleinimide aus einer Aminkomponente und einem Bismaleinimid sind diprimäre Diamine sowie primäre Tri- und Tetraamine geeignet. Beispiele für derartige Amine sind bereits bei der Beschreibung der Polyamidocarbonsäuren aufgeführt. Weiterhin geeignet sind oligomere Polyamine, wie sie z.B. in der DE-OS 21 31 735 beschrieben sind.

Die Herstellung der Polybismaleinimide kann in einem inerten polaren Lösemittel wie z.B. Dimethylformamid, N-Methylpyrrolidon, Kresol, Chlorbenzol oder Dimethylacetamid oder auch lösemittelfrei durchgeführt werden, indem die zuvor innig gemischten Reaktionskomponenten ggf. in Gegenwart eines Katalysators, wie z.B. Essigsäure, p-Toluolsulfonsäure oder Maleinsäure, erhitzt werden.

In einem zweiten Schritt wird das Polybismaleinimid mit einem Monomeren copolymerisiert, da das Polybismaleinimid spröde ist. Bei höheren Anteilen an Monomeren, z.B. bei Zusatz von mehr als 10 Gew.-% Diallylphthalat, bezogen auf Polybismaleinimid, muß ein organischer Radikalstarter, wie z.B. eine organische Perverbindung, z.B. t-Butylperbenzoat, zugegeben werden.

Für die Copolymerisation geeignet sind insbesondere Monomere mit zumindest einer durch Erhitzen polymerisierbaren $CH_2=C<$-Gruppe. Enthalten diese Monomeren mehrere derartige Gruppen, dürfen sie nicht konjugiert sein. Die Doppelbindungen können dem Vinyl-, Malein-, Allyl- und Aryltyp angehören. Die verwendbaren Monomeren können Ester, Ether, Kohlenwasserstof fe, substituierte heterocyclische Verbindungen, Organometall- oder Organometalloidverbindungen sein. Beispiele für derartige Monomere sind Acrylate, Methacrylate, Vinylpyrrolidon, Diallylphthalat, Triallyltriazin, Triallylisocyanurat, Diallylbenzol, Styrol und Vinyltoluol. Bevorzugt eingesetzt werden Styrol, Vinyltoluol, Vinylpyrrolidon, Diallylphthalat, Triallyltriazin, Triallylisocyanurat und Diallylbenzol. Besonders bevorzugt wird Diallylphthalat eingesetzt.

Die Härtung der Polybismaleinimide erfolgt thermisch.

Geeignete Pigmente und/oder Füllstoffe (Komponente B) sind Korrosionsschutzpigmente wie z.B. Strontiumchromat, Zinkchromat, Bleichromat, Zinkphosphat usw. sowie metallische Pigmente wie z.B. Aluminium-, Titan-, Stahlflakes und dergleichen. Beispiele für geeignete Hilfsstoffe und Additive sind Siliconöle, Wachse, Silikate und pyrogene Kieselsäuren.

Als organische Lösemittel kommen lineare und/oder cyclische aliphatische und/oder aromatische Kohlenwaserstoffe, Ether, Ester, Alkohole, Amide, Phenole und Kresole zum Einsatz. Bevorzugt sind aromatische Kohlenwasserstoffe, N-Methylpyrrolidon, N,N-Dimethylformamid, N,N-Dimethylacetamid, Kresole und Glykolether.

Die als Komponente E zugesetzten Radikalstarter sind z.B. organische Perverbindungen wie z.B. Dibenzoylperoxid, Dicumylperoxid, t-Butylperbenzoat und Diacylperoxide wie z.B. Diacetylperoxid. Bevorzugt wird t-Butylperbenzoat eingesetzt.

Die Herstellung der Beschichtungsmittel erfolgt durch Mischen der einzelnen Komponenten, wobei zuerst die Bindemittel im Lösemittel oder im Lösemittelgemisch gelöst werden. Sofern den Beschichtungsmitteln noch andere, unlösliche Bestandteile, wie Pigmente, Füllstoffe, Additive und dergleichen zugesetzt werden, können diese entweder der Lösung zugegeben werden oder - soweit erforderlich - mit den in der Lackindustrie üblichen Dispergieraggregaten dispergiert werden.

Das erfindungsgemäße Verfahren umfaßt eine ein- oder zweischichtige Verarbeitung, d.h. es kann entweder nur eine Schicht aufgebracht werden oder die Beschichtung setzt sich aus einer Grundierung und einem Decklack zusammen, die beide nach dem Coil-Coating-Verfahren appliziert werden. Das Bindemittel für die Grundierung muß unempfindlich sein gegen Mittel, mit denen Coil-Coating-Bleche vorbehandelt werden, z.B. Phosphorsäure. Als Komponente A für die Grundierungsbindemittel sind daher nur Polyhydantoine und Polyesterimide einsetzbar. Die als Komponente A einsetzbaren Verbindungen für Bindemittel für Decklacke dagegen unterliegen keiner derartigen Beschränkung. Bei der Verwendung von Polyamidocarbonsäure muß aber jeweils dem Decklack ein Alkohol wie z.B. n-Butanol oder tert. Butanol zugegeben werden, µm die Viskosität des Systems zu stabilisieren.

Gegenstand der Erfindung ist insbesondere ein Verfahren, bei dem zunächst die Grundierung mit einer Trockenfilmstärke von 4 bis 15µm, vorzugsweise von 5 bis 11µm, appliziert wird und nach dem Aushärten der Grundierung der Decklack mit einer Trockenfilmstärke von 4 bis 23µm, vorzugsweise 5 bis 17µm, appliziert wird. Bei diesem mehrschichtigen Verfahren enthält das als Grundierung verwendete Beschichtungsmittel vorzugsweise Korrosionsschutzpigmente, wie z.B. Strontiumchromat, Zinkchromat, Bleichromat, Zinkpulver und Zinkphosphat. Das als Decklack verwendete Beschichtungsmittel enthält bevorzugt metallische Pigmente, wie z.B. Aluminium-, Titan- und Stahlflakes.

Die Aushärtung der erfindungsgemäßen Beschichtungsmittel erfolgt gewöhnlich bei Objekttemperaturen von 200 bis 350°C und Einbrennzeiten von 30 bis 120 s nach einem in der Bandbeschichtung üblichen Verfahren.

Die nach den erfindungsgemäßen Verfahren hergestellten beschichteten Metallbänder werden bevorzugt verwendet zur Herstellung von thermisch belasteten Teilen, wie Auspuffteilen, Abluftrohren, Ofen- und Heizkörperverkleidungen und Grillgeräten.

Die erhaltenen Beschichtungen unterscheiden sich von den üblichen Auspuffbeschichtungen dadurch, daß sie eine kurze Einbrennzeit aufweisen, gute mechanische Verformungseigenschaften besitzen, wasser-, salz-, benzin-, öl- und bremsflüssigkeitsbeständig sind, schockfest sowie beständig gegen Auspuffverbrennungsprodukte sind, einen guten Korrosionsschutz aufweisen und keine Substrat- und/oder Zwischenhaftungsprobleme aufweisen. Außerdem tritt der Vorteil auf, daß die verwendeten Beschichtungsmittel eine hervorragende Lagerstabilität haben.

Im folgenden wird die Erfindung anhand von Ausführungsbeispielen näher erläutert. In diesen Beispielen beziehen sich alle Prozentangaben auf Gewichtsprozent, alle Anteile auf Gewichtsteile.

Herstellung des Polyesterimids:

Das Polyesterimid wird nach der in der DE-AS 14 45 263 beschriebenen Methode hergestellt aus:
23,9 Teilen Tris-(2-hydroxyethyl)-isocyanurat,
14,6 Teilen Ethylenglycol,
20,5 Teilen Dimethylterephthalat,
13,9 Teilen 4,4′-Diaminodiphenylmethan,
27,1 Teilen Trimellithsäureanhydrid,
1,0 Teil Tetra-n-butyltitanat.
Eine 48%ige Lösung dieses Polyesterimids (OH-Zahl = 75 bis 100 mg KOH/g) in Methyldiglykol-Solvesso weist eine Viskosität von 360 bis 400 mPas auf.

Herstellung des Polyhydantoins:

Das Polyhydantoin wird nach der im Chemical Abstract Referat Nr. 105(4):25859 des Artikels von G. Cynkowska,
J. Zakrzewski, E. Wardzinska, Polymeri (Warsawa), 30(11-12), 449-54 (1985), beschriebenen *Methode, hergestellt aus:*

92,5 Teilen N,N'-Bis(ethoxycarbonylmethyl)-4,4'-diaminodiphenylmethan,
81,2 Teilen Diphenylmethandiisocyanat.

Eine 30%ige Lösung dieses Polyhydantoins in Kresol hat eine Viskosität von 1800 mPas.

Herstellung des Polyamidimids:

Das Polyamidimid wird nach der in der DE-AS 12 66 427 beschriebenen Methode hergestellt aus:

38,5 Teilen Trimellithsäureanhydrid,
60,0 Teilen Diphenylmethandiisocyanat.

Eine 33%ige Lösung in N-Methylpyrrolidon (NMP) hat eine Viskosität von 1500 mPas.

Herstellung der Polyamidocarbonsäure:

Die Polyamidocarbonsäure wird nach der in der GB-PS 898651 beschriebenen Methode hergestellt aus:

40,0 Teilen 4,4'-Diaminodiphenyloxid,
43,6 Teilen Pyromellithsäureanhydrid.

Eine 16%ige Lösung in N-Methylpyrrolidon (NMP) hat eine Viskosität von 4000 mPas.

Herstellung des Polybismaleinimids:

Das Polybismaleinimid wird nach der in der DE-OS 21 31 735 beschriebenen Methode hergestellt aus:

72,0 Teilen Bis-(4-maleinimidophenyl)-methan,
20,0 Teilen Bis-(4-aminophenyl)-methan.

Eine 30%ige Lösung in NMP weist eine Viskosität von 2200 mPas auf.

Beispiel 1: Grundierung 1

Aus 67,1 g einer 45%igen Lösung des oben beschriebenen Polyesterimids in Methyldiglykol-Solvesso 150, 0,6 g eines Umesterungskatalysators (z.B. in Methyldiglykol-Solvesso 150 lösliches organisches Titanat), 29,7 g Zinkpulver, 0,12 g eines Aluminiumsilikats, 0,2 g eines Teflonpulvers, 1,9 g Tetralin und 0,3 g eines silikonhaltigen Verlaufmittels wird durch Dispergieren eine Grundierung hergestellt. Der Festkörper beträgt 60,9 %. Die DI N 4-Auslaufzeit beträgt 91 s.

Beispiel 2: Grundierung 2

Aus 44,4 g einer 30%igen Lösung des oben beschriebenen Polyhydantoins in Kresol, 12,3 g Zinkpulver, 0,5 g eines Aluminiumsilikats, 0,5 g eines Teflonpulvers, 33,4 g N-Methylpyrrolidon, 8,3 g Solvesso 150 und 0,6 g eines silikonhaltigen Verlaufmittels wird durch Dispergieren eine Grundierung hergestellt. Der Festkörper beträgt 27,2 %. Die DIN 4-Auslaufzeit ist 200 s.

Beispiel 3: Decklack 1

14,3 g Aluminiumpulver oder -flakes und 14,3 g Solvesso 150 werden angeteigt und mit 71,4 g der oben beschriebenen 45%igen Polyesterimidlösung sowie 0,6 g eines Umesterungskatalysators (z.B. in dem verwendeten Lösungsmittel lösliches organisches Titanat) versetzt. Der entstandene Lack hat einen Festkörper von 46 ,1 % und eine Auslaufzeit (DIN 4) von 97 s.

Beispiel 4: Decklack 2

7,4 g Aluminiumpulver oder -flakes werden mit 13,8 g N-Methylpyrrolidon angeteigt. Dann werden 55,3 g einer 16%igen Lösung der Polyamidocarbonsäure in N-Methylpyrrolidon und 8,1 g Butanol zugegeben, und mit 15,4 g N-Methylpyrrolidon wird auf einen Festkörper von 15,4 % und eine DIN 4-Auslaufzeit von 185 s eingestellt.

Beispiel 5: Decklack 3

7,9 g Aluminiumpulver oder -flakes werden mit 5,9 g Diacetonalkohol und 5,3 g Dimethylformamid angeteigt. Dann werden 70,2 g der 33%igen Polyamidimidlösung, 3,6 g Propylencarbonat, 7,0 g Solvesso 150 und 0,2 g eines silikonhaltigen Verlaufmittels eingerührt. Der Festkörper beträgt 31,1 %. die DIN 4-Auslaufzeit 147 s.

Beispiel 6: Decklack 4

4,3 g Aluminiumpulver oder -flakes werden mit 7,9 g N-Methylpyrrolidon angeteigt. Dann werden 45,5 g der 30%igen Polyhydantoinlösung und 15,9 g N-Methylpyrrolidon zugegeben. Mit 26,4 g einer N-Methylpyrrolidon:Solvesso 150 = 1:1-Lösung wird ein Festkörper von 18,0 % bei einer DIN 4-Auslaufzeit von 162 s eingestellt.

Beispiel 7: Decklack 5

Zu einer Paste aus 14,2 g Aluminiumpulver oder -flakes und 14,2 g Solvesso 150 werden 53,2 g der 30%igen Polybismaleinimidlösung zugegeben. 12,7 g N-Methylpyrrolidon und 2,1 g Propylencarbonat werden eingearbeitet. Dann erfolgt die Zugabe von 3,57 g Diallylphthalat und 0,01 g t-Butylperbenzoat. Der Lack hat einen Festkörper von 33,2 % bei einer DIN 4-Auslaufzeit von 120 s.

Die Prüfung der erfindungsgemäßen Beschichtungen erfolgt nach den entsprechenden ECCA-Vorschriften (ECCA ist die Abkürzung für European Coil Coating Association). Die Ergebnisse sind in den Tabellen 1-3 zusammengefaßt.

Tabelle 1

Prüfergebnisse

| Substrat | Allodine 1200[1)] | | | | |
|---|---|---|---|---|---|
| Grundierung | - | - | - | - | - |
| Einbrennzeit (s) | 120 | 300 | 120 | 120 | 120 |
| Objekttemperatur (°C) | 289 | 289 | 289 | 289 | 289 |
| Schichtstärke (µm)(trocken) | - | - | - | - | - |
| Decklack[2)] | 2 | 2 | 3 | 4 | 5 |
| Gesamtschichtstärke (µm) (trocken) | 8 | 10 | 8 | 11 | 13 |
| Bleistifthärte | F | F | F | F | H |
| Buchholzhärte | - | - | 133 | 149 | 146 |
| Münztest[3)] (Substrathaftung) | mittel | gut | gut | gut | gut |
| MEK-Doppelhübe[4)] | >100 | >100 | >100 | 90 | >100 |
| T-Bend/Tape-Test[5)] | 2,0/0 | 2,0/0 | 1,5/0 | 2,0/0 | 2,0/0 |
| Alterung (180°C, 30 min) | 2,0/0 | 2,0/0 | 1,5/0 | 2,0/0 | 2,0/0 |
| Oberfläche | gut | gut | gut | gut | gut |

1) vorbehandeltes Aluminiumblech

2) Einbrennzeit und Objekttemperatur wie Grundierung

3) Verfahren nach den ECCA-Vorschriften zur Prüfung der Substrathaftung und der Zwischenhaftung

4) Ein mit Methylethylketon getränkter Wattebausch wird in regelmäßigen Doppelhüben über den Film bewegt, bis der Untergrund sichtbar ist. Die Auflagekraft ist ca. 20 N.

5) Verfahren nach den ECCA-Vorschriften zur Prüfung der Haftung und der Elastizität

Tabelle 2

Prüfergebnisse

| Substrat | Allodine 1200[1)] | | | | | |
|---|---|---|---|---|---|---|
| Grundierung | 1 | 2 | 1 | 2 | 1 | 2 |
| Einbrennzeit (s) | 120 | 120 | 120 | 120 | 120 | 120 |
| Objekttemperatur (°C) | 289 | 289 | 289 | 289 | 289 | 289 |
| Schichtstärke (µm) (trocken) | 8 | 8 | 8 | 8 | 11 | 11 |
| Decklack[2)] | 2 | 2 | 3 | 3 | 4 | 4 |
| Gesamtschichtstärke (µm)(trocken) | 16 | 15 | 18 | 17 | 17 | 16 |
| Bleistifthärte | F | F | F | F | F | F |
| Buchholzhärte | 165 | 180 | 189 | 200 | 139 | 163 |
| Münztest[3)] | | | | | | |
| (Substrathaftung) | sehr gut | sehr g. | sehr g. | sehr g. | sehr g. | sehr g. |
| (Zwischenhaftung) | sehr gut | sehr gut | gut | gut | gut | gut |
| MEK-Doppelhübe[4)] | >100 | >100 | >100 | >100 | 90 | 90 |
| T-Bend/Tape-Test[5)] | 3,0/0 | 1,0/0 | 2,0/0 | 1,5/0 | 1,5/0 | 1,0/0 |
| Alterung (180°C, 30 min) | - | 1,0/0 | - | 1,5/0 | 1,5/0 | 1,0/0 |
| Oberfläche | gut | gut | gut | gut | gut | gut |

1) vorbehandeltes Aluminiumblech

2) Einbrennzeit und Objekttemperatur wie Grundierung

3) Verfahren nach den ECCA-Vorschriften zur Prüfung der Substrathaftung und der Zwischenhaftung

4) Ein mit Methylethylketon getränkter Wattebausch wird in regelmäßigen Doppelhüben über den Film bewegt, bis der Untergrund sichtbar ist. Die Auflagekraft ist ca. 20 N.

5) Verfahren nach den ECCA-Vorschriften zur Prüfung der Haftung und der Elastizität

Tabelle 3

Prüfergebnisse

| Substrat | Allodine[1] 1200 | Bonder[2] 901 | Granodine[3] C 108 |
|---|---|---|---|
| Grundierung | 2 | 2 | 2 |
| Einbrennzeit (s) | 120 | 120 | 120 |
| Objekttemperatur (°C) | 289 | 277 | 277 |
| Schichtstärke (µm) (trocken) | 9 | 9 | 9 |
| Decklack[4] | 1 | 1 | 1 |
| Gesamtschichtstärke (µm) (trocken) | 28 | 26 | 26 |
| Bleistifthärte | H | H | H |
| Buchholzhärte | 166 | 160 | 170 |
| Münztest[5] (Substrathaft.) | sehr gut | sehr gut | sehr gut |
| (Zwischenhaft.) | gut | gut | gut |
| MEK-Doppelhübe[6] | >100 | >100 | >100 |
| T-Bend/Tape-Test[7] | 1,0/0 | 1,0/0 | 3,0/0 |
| Alterung (180°C, 30 min) | 1,0/0 | 1,0/0 | 3,0/0 |
| Oberfläche | gut | gut | gut |

1) vorbehandeltes Aluminiumblech

2) phosphatiertes Stahlblech

3) chromatiertes Stahlblech

4) Einbrennzeit und Objekttemperatur wie Grundierung

5) Verfahren nach den ECCA-Vorschriften zur Prüfung der Substrathaftung und der Zwischenhaftung

6) Ein mit Methylethylketon getränkter Wattebausch wird in regelmäßigen Doppelhüben über den Film bewegt, bis der Untergrund sichtbar ist. Die Auflagekraft ist ca. 20 N.

7) Verfahren nach den ECCA-Vorschriften zur Prüfung der Haftung und der Elastizität

Langzeitalterungsversuche (65 h, 250 °C) zeigten, daß bei den oben beschriebenen Systemen keine Abnahme der Haftung auf dem Untergrund und kein Abfall sonstiger Eigenschaften stattfindet. Außerdem zeigen alle Systeme eine gute Wärmeschockbeständigkeit; z.B. wird die Haftung durch wiederholtes Erhitzen auf 250 °C und Eintauchen in kaltes Wasser nicht beeinträchtigt. Die Beständigkeit gegen Kraftstoffe, Wasser und Salzwasser ist hervorragend.

## Ansprüche

1. Verfahren zum Beschichten von Metallbändern im Bandlackierverfahren unter Verwendung hochhitzebeständiger Systeme, dadurch gekennzeichnet, daß

I. die Beschichtungsmittel bestehen aus

A) einem hochhitzebeständigen System, entweder bestehend aus

a) 3 bis 50 Gew.-%, vorzugsweise 20 bis 40 Gew.-%, Polyesterimidharz, wobei 20- bis 60gew.-%ige Lösungen der Polyesterimide bei 23 °C Viskositäten im Bereich von 90 bis 4000 mPas aufweisen und die Hydroxylzahlen der Polyesterimide im Bereich von 50 bis 200 mg KOH/g liegen,
oder
b) 3 bis 50 Gew.-%, vorzugsweise 8 bis 30 Gew.-%, Polyhydantoinen, wobei 20- bis 40gew.-%ige Lösungen der Polyhydantoine bei 23 °C Viskositäten im Bereich von 1000 bis 3000 mPas aufweisen,
oder
c) 3 bis 40 Gew.-%, vorzugsweise 5 bis 20 Gew.-%, Polyamidocarbonsäuren,wobei 10- bis 30gew.-%ige Lösungen der Polyamidocarbonsäuren bei 23 °C Viskositäten im Bereich von 2000 bis 7000 mPas aufweisen und wobei die Polyamidocarbonsäuren durch Cyclisierung Imidringe ausbilden,
oder
d) 3 bis 50 Gew.-%, vorzugsweise 15 bis 35 Gew.-%, Polyamidimiden, wobei 20- bis 40gew.-%ige Lösungen der Polyamidimide bei 23 °C Viskositäten im Bereich von 800 bis 3000 mPas aufweisen,
oder
e) 3 bis 50 Gew.-%, vorzugsweise 8 bis 35 Gew.-%, Polybismaleinimiden, wobei 20- bis 40gew.-%ige Lösungen der Polybismaleinimide bei 23 °C Viskositäten im Bereich von 200 bis 4000 mPas aufweisen,

B) 3 bis 40 Gew.-%, vorzugsweise 10 bis 30 Gew.-%, Pigmente und/oder Füllstoffe,
C) bis zu 3 Gew.-% für den Einsatzzweck geeignete Hilfsstoffe und Additive,
D) 10 bis 90 Gew.-%, vorzugsweise 20 bis 70 Gew.-%, eines oder mehrerer organischer Lösemittel,
E) falls Polybismaleinimide eingesetzt werden, bis zu 45 Gew.-% eines olefinisch ungesättigten Monomeren - bezogen auf Polybismaleinimid - und gegebenenfalls einem Radikalstarter,

wobei die Summe aller Komponenten A) bis E) jeweils 100 Gew.-% beträgt,

II. bei einer zweischichtigen Verarbeitung der Beschichtungsmittel die Grundierung als hochhitzebeständiges System A) nur Polyesterimide Aa) oder Polyhydantoine Ab) und der Decklack als hochhitzebeständiges System A) eine der Komponenten Aa) bis Ae) enthält, wobei aber Beschichtungsmittel ausgenommen sind, bei denen sowohl die Grundierung als auch der Decklack Polyesterimide als Komponente A) enthält,

III. bei einer einschichtigen Verarbeitung der Beschichtungsmittel als Komponente A) keine Polyesterimide eingesetzt werden und

IV. die Aushärtung der Metallbänder unter Verwendung von geeigneten Katalysatoren bei Objekttemperaturen von 200 bis 350 °C während einer Zeit von 30 bis 120 s erfolgt.

2. Verfahren nach Anspruch 1, dadurch gekennzeichnet, daß als Komponente Aa) tris-(2-hydroxyethyl)-isocyanurathaltiges Polyesterimid eingesetzt wird.

3. Verfahren nach Anspruch 1 oder 2, dadurch gekennzeichnet, daß als olefinisch ungesättigte Monomere (Komponente E) Diallylphthalat eingesetzt wird.

4. Verfahren nach Anspruch 1 bis 3, dadurch gekennzeichnet, daß als Radikalstarter t-Butylperbenzoat (Komponente E) eingesetzt wird.

5. Verfahren nach Anspruch 1 bis 4, dadurch gekennzeichnet, daß zunächst die Grundierung mit einer Trockenfilmstärke von 4 bis 15µm, vorzugsweise 5 bis 11µm, appliziert wird und nach dem Aushärten der Grundierung der Decklack mit einer Trockenfilmstärke von 4 bis 23µm, vorzugsweise 5 bis 17µm, appliziert wird.

6. Verfahren nach Anspruch 5, dadurch gekennzeichnet, daß die Grundierung Korrosionsschutzpigmente und der Decklack Metallpigmente enthält.

7. Verwendung der nach den Verfahren 1 bis 6 hergestellten Metallbänder zur Herstellung von thermisch stark belasteten Teilen.

8. Verwendung der nach den Verfahren 1 bis 6 hergestellten Metallbänder zur Herstellung von Auspuffteilen.

9. Verwendung von Lacken auf der Basis der Beschichtungsmittel nach Anspruch 1 bis 4 für das Coil-Coating-Verfahren.

Europäisches Patentamt

# EUROPÄISCHER RECHERCHENBERICHT

Nummer der Anmeldung

EP 88 11 8094

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 133 519 (BAYER)<br>--- | | C 09 D 3/70<br>C 08 L 79/08<br>B 05 D 7/16 |
| A | US-A-4 329 397 (O.S. ZAMEK)<br>--- | | |
| A | FR-A-2 311 831 (FA. CHEMISCHE FABRIK DR. WIEDEKING)<br>----- | | |
| | | | RECHERCHIERTE SACHGEBIETE (Int. Cl.4) |
| | | | C 09 D<br>C 08 L<br>B 05 D |

Der vorliegende Recherchenbericht wurde für alle Patentansprüche erstellt

| Recherchenort | Abschlußdatum der Recherche | Prüfer |
|---|---|---|
| DEN HAAG | 10-03-1989 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)